# EUROPÄISCHE PATENTSCHRIFT

(11) **EP 1 482 171 B1**
(45) Veröffentlichungstag und Bekanntmachung des Hinweises auf die Patenterteilung: **10.10.2018**
(21) Anmeldenummer: 04003971.1
(22) Anmeldetag: 21.02.2004
(51) Int. Cl.: B60K 6/485, F02N 11/04, F02N 15/00, F02N 15/02, F16D 13/38, H02K 7/00, B60K 17/02

(54) **Anordnung einer Starter-Generator Vorrichtung**
Arrangement of a starter generator
Agencement d'un démarreur-alternateur

(30) Priorität: 27.05.2003 DE 10323971
(43) Veröffentlichungstag der Anmeldung: 01.12.2004
(73) Patentinhaber: AUDI AG, 85045 Ingolstadt (DE)
(72) Erfinder: Märkl, Johann, 85128 Nassenfels (DE)
(74) Vertreter: Bauer, Dominik Michael

(56) Entgegenhaltungen:
- EP-A2- 1 199 468
- WO-A-95/29529
- WO-A1-00/56565
- DE-A1- 3 243 514
- DE-A1- 4 323 601
- DE-A1- 19 916 459
- DE-A1- 19 937 545
- DE-A1- 19 941 705
- DE-A1- 19 943 036
- DE-A1- 19 962 507
- DE-C1- 10 027 246
- JP-A- H04 145 852
- JP-B2- 3 141 262

## Beschreibung

Die Erfindung betrifft eine Anordnung einer Starter-Generator-Vorrichtung für Kraftfahrzeuge, gemäß dem Oberbegriff des Patentanspruches 1.

Eine Anordnung einer Starter-Generator-Vorrichtung (im folgenden als Vorrichtung bezeichnet) zeigt beispielsweise die DE 199 16 459 A1, bei der die Trennkupplung im wesentlichen axial hinter dem Rotor und Stator der Vorrichtung angeordnet ist. Dies verlängert die Baueinheit Brennkraftmaschine und Geschwindigkeits-Wechselgetriebe nicht unbeträchtlich und kann zu Einbauproblemen führen.

Eine gattungsbildende Anordnung einer Starter-Generator-Vorrichtung ist aus der WO 00/56565 A1 bekannt. Dabei weist die Starter-Generator-Vorrichtung ein an der Brennkraftmaschine und am Wechselgetriebe befestigbares Gehäuse auf, in dem ein Rotor, ein Stator und eine den Kraftfluss unterbrechende Trennkupplung angeordnet sind. Das Gehäuse verjüngt sich dabei im Querschnitt in Richtung auf das Wechselgetriebe, weshalb keine teleskopartige Verschränkung zwischen dem Gehäuse und dem Anschlussflansch des Wechselgetriebes ermöglicht ist.

Die DE 32 43 514 A1 zeigt eine Antriebsanordnung für ein Kraftfahrzeug mit einem Motorgehäuse, an dem ein Trägerflansch anbringbar ist. Dabei weist der Trägerflansch eine Ausnehmung auf, in die Blechlamellen eines Stators eingesetzt sind. An dem Trägerflansch ist ein Kupplungsgehäuse befestigbar, das ein Schwungrad und Kupplungen abdeckt.

Ferner ist aus der DE 199 37 545 A1 ein auf einer Aufnahme gelagerter Rotor bekannt, wobei die Aufnahme Teil eines Trägerflansches ist, der über zwei Kugellager auf einem mit dem Getriebegehäuse fest verbundenen Lagerflansch wälzgelagert ist. Der Lagerflansch ist auf einem Schieberteil gelagert, das in drei unterschiedliche Schieberstellungen verschiebbar ist. Zwischen dem Schieber und einer Schwungmasse ist eine Steckverzahnung vorgesehen, wobei die Schwungmasse über mehrere Schraubverbindungen mit einer Antriebswelle verbunden ist.

Aufgabe der Erfindung ist es, eine Anordnung der gattungsgemäßen Art vorzuschlagen, die baulich besonders günstig ist und die eine größere Kompatibilität hinsichtlich der Einbaukriterien ermöglicht.

Diese Aufgabe wird erfindungsgemäß mit den kennzeichnenden Merkmalen des Patentanspruches 1 gelöst. Vorteilhafte Weiterbildungen der Erfindung beschreiben die weiteren Patentansprüche.

Erfindungsgemäß wird vorgeschlagen, dass der Rotor und der Stator der Vorrichtung radial über der nachgeschalteten Trennkupplung positioniert sind, wobei der Rotor auf einem topfförmigen und an der Kraftabgabewelle der Brennkraftmaschine befestigten Antriebsteil befestigt ist. Die Trennkupplung (z.B. eine Einscheiben-Trocken-Reibungskupplung) liegt damit zumindest nahezu innerhalb des topfförmigen Antriebsteiles, wodurch die Länge des gesamten Antriebsaggregates nur unwesentlich zunimmt. Daraus resultiert, dass bei einer Ausführung des Kraftfahrzeuges mit oder ohne der besagten Vorrichtung viele Teile Gleichteile bleiben, die alternativ verbaubar sind.

Besonders vorteilhaft kann das topfförmige Antriebsteil mit einem Zweimassenschwungrad kombiniert sein, dessen Sekundärmasse die nachgeschaltete Trennkupplung bildet. Das Zweimassenschwungrad und die Trennkupplung können dabei im wesentlichen bekannter Bauart sein, wobei lediglich die Primärmasse des Zweimassenschwungrades mit einem Zylinderabschnitt zu versehen ist, der den Rotor der Vorrichtung trägt.

Erfindungsgemäß sind geschichtete Blechlamellen des Stators innerhalb des ringförmigen, einerseits offenen Gehäuses der Vorrichtung kraft- und/oder formschlüssig aufgenommen und vom anschließenden Gehäuseflansch des Wechselgetriebes gehalten. Dies ergibt eine hinsichtlich der Montage und des Bauaufwandes einfache Konstruktion, die eine Vormontage der Vorrichtung am Wechselgetriebe ermöglicht. Zudem können die radialen Abmessungen der Vorrichtung minimiert werden.

Ferner sind erfindungsgemäß die Blechlamellen des Stators von umlaufenden Kühlkanälen innerhalb des Gehäuses umgeben und mit dem Kühlsystem der Brennkraftmaschine über Leitungen und/oder integrierte Kanäle verbunden. Damit können Überhitzungen der Vorrichtung auch bei hohen Generatorleistungen ausgeschlossen werden. Herstellungstechnisch besonders einfach können dabei die Kühlkanäle durch im Durchmesser unterschiedlich große Blechlamellen gebildet sein, die im Zusammenwirken mit dem ringförmigen Gehäuse die Kühlkanäle darstellen.

Das Gehäuse der Vorrichtung kann mit einem ringförmigen Flanschabschnitt an der Brennkraftmaschine befestigt sein und es können zumindest einige Schrauben zur Befestigung des Wechselgetriebes den Anschlussflansch des Wechselgetriebes und das Gehäuse mit den Blechlamellen durchdringen. Damit kann vorteilhaft die Vorrichtung an der Brennkraftmaschine vormontiert werden, wobei das Flanschbild an der Brennkraftmaschine bei Antriebsaggregaten mit oder ohne Starter-Generator-Vorrichtung gleich sein kann. Sodann können einige weitere Schrauben von der Wechselgetriebeseite her in das Gehäuse der Vorrichtung zur Befestigung des Wechselgetriebes und des Stators im Gehäuse eingeschraubt sein. Diese Schrauben können unabhängig vom Flanschbild der Brennkraftmaschine positioniert sein, also beispielsweise auch radial weiter außen.

Unabhängig davon können einige weitere Schrauben zur Befestigung des Wechselgetriebes zusätzlich den Anschlussflansch der Brennkraftmaschine durchdringen; dies ist dort vorteilhaft, wo aufgrund der Konfiguration der Brennkraftmaschine ohne Veränderung deren Flanschbildes eine radial weiter außen liegende Verankerung der Schrauben gegeben ist. Es versteht sich, dass ein derartiges "Durchschrauben" die Steifigkeit der gesamten Anordnung und Flanschverbindungen erhöht.

Des weiteren können zur Befestigung des Flanschabschnittes des Gehäuses mit der Brennkraftmaschine teilweise Befestigungsschrauben von der Gehäuseseite und teilweise Befestigungsschrauben von der Brennkraftmaschinenseite her eingeschraubt sein. Dadurch erhöht sich der konstruktive Freiheitsgrad hinsichtlich der Kopffreiheit und der Zugänglichkeit der Schrauben bei der Montage der Vorrichtung.

Erfindungsgemäß ragt der an das Gehäuse angeschraubte Anschlussflansch des Wechselgetriebes mit einem Ringvorsprung in das Gehäuse ein, und in diesen Ringvorsprung ist erfindungsgemäß ein umlaufender Dichtring zur Abdichtung der Kühlkanäle des Gehäuses eingesetzt. Dies sichert eine zuverlässige Abdichtung der Kühlkanäle bei einfacher Montage der Bauteile.

Ein Ausführungsbeispiel der Erfindung ist im Folgenden mit weiteren Einzelheiten näher beschrieben.

Die anliegende schematische Zeichnung zeigt die obere Hälfte eines Längsschnittes durch eine Anordnung einer Starter-Generator-Vorrichtung zwischen einer Brennkraftmaschine und einem Geschwindigkeits-Wechselgetriebe für Kraftfahrzeuge.

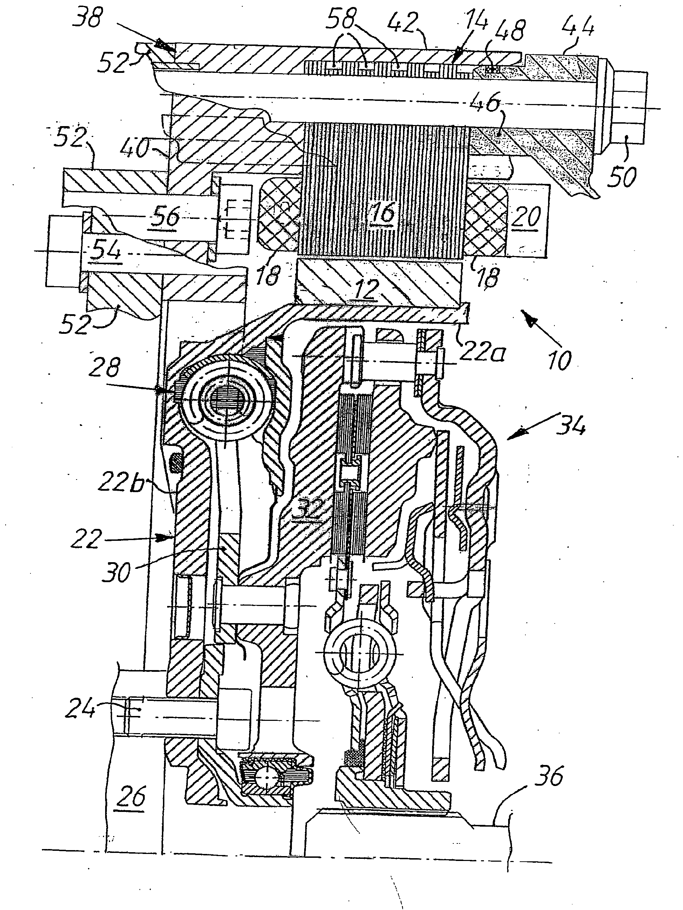

In der Zeichnung ist mit 10 eine Starter-Generator-Vorrichtung bezeichnet, die sich aus einem rotationssymetrischen Rotor 12 und einem ringförmig diesen umschließenden Stator 14 mit Blechlamellen 16 und elektrischen Wicklungen 18 zusammensetzt. Die Wicklungen 18 sind bei 20 über elektrische Leitungen mit dem Bordnetz des Kraftfahrzeuges verbunden, wobei die Vorrichtung in bekannter Weise als Startermotor, als Antriebsmotor oder als Generator zur Stromerzeugung schaltbar ist.

Der ringförmige Rotor 12 ist auf dem Zylinderabschnitt 22a eines topfförmigen Antriebsteiles 22 befestigt, wobei das Antriebsteil 22 über das Flanschteil 22b und Befestigungsschrauben 24 mit der Kraftabgabewelle bzw. Kurbelwelle 26 der Brennkraftmaschine verbunden ist.

Das topfförmige Antriebsteil 22 bildet die Primärmasse eines Zweimassenschwungrades an sich bekannter Bauart, dessen Dämpfungseinrichtungen 28 über ein scheibenförmiges Abtriebsteil 30 mit der Druckplatte 32 einer nicht weiter beschriebenen Einscheiben-Trocken-Reibungskupplung bekannter Bauart bzw. Trennkupplung 34 verbunden ist. Die Druckplatte 32 und die Trennkupplung 34 bilden die Sekundärmasse des Zweimassenschwungrades.

Der Kraftfluss bzw. das Antriebsmoment verläuft von der Kurbelwelle 26 der Brennkraftmaschine über das Antriebsteil 22, die Dämpfungseinrichtung 28, das Abtriebsteil 30 und die Trennkupplung 34 (sofern die Kupplung geschlossen ist) auf die nur angedeutete Eingangswelle 36 des Geschwindigkeits-Wechselgetriebes des Kraftfahrzeuges, wobei wie ersichtlich auch der Rotor 12 entsprechend das Antriebsteil 22 antreiben kann.

Der Stator 14 ist in einem ringförmigen Gehäuse 38 angeordnet, welches im wesentlichen aus einem radial nach innen ragenden Flanschabschnitt 40 und einem Zylinderabschnitt 42 besteht und gegenüber einem Flanschabschnitt 44 des Getriebegehäuses des Wechselgetriebes offen ausgebildet ist.

Der Flanschabschnitt 44 trägt einen Ringvorsprung 46, in den in eine entsprechende Nut ein elastischer Abdichtring 48 eingesetzt ist, der das Ringteil 42 des Gehäuses 38 nach außen dicht abschließt. Gleichzeitig spannt der Ringvorsprung 46 bei entsprechender Befestigung des Flanschabschnittes 44 mittels der Schrauben 50 den Stator 14 kraftschlüssig ein; ggf. kann jedoch auch ein Formschluss in Umfangsrichtung vorgesehen sein.

Das Gehäuse 38 bzw. dessen Flanschabschnitt 40 der Vorrichtung 10 ist an der Brennkraftmaschine an deren Anschlussflansch 52 (nur teilweise angedeutet) über mehrere umfangsmässig verteilte Schrauben 54, 56 befestigt, wobei wie ersichtlich einige Schrauben 54 (es ist jeweils nur eine Schraube dargestellt, die zudem durch Übereinanderlegen mehrerer Schnittebenen nicht vollständig ersichtlich sind) von der Brennkraftmaschinenseite her und einige Schrauben 56 von der entgegengesetzten Gehäuseseite her eingeschraubt sind.

Auch die zur Befestigung des Wechselgetriebes bzw. dessen Flanschabschnittes 44 verwendeten Schrauben 50 sind unterschiedlich; so sind einige Schrauben (nicht dargestellt) kürzer und erstrecken sich nur durch den Flanschabschnitt 44, den Stator 14 und sind dann über eine Gewindebohrung mit dem Gehäuse 38 verschraubt. Andere Schrauben 50 hingegen sind wie dargestellt länger und erstrecken sich dadurch durch das Gehäuse 38 und sind dann mit dem Anschlussflansch 52 an der Brennkraftmaschine z.B. mittels Gewindebohrungen oder Gegenmuttern verschraubt.

Die Blechlamellen 16 des Stators 14 sind im Durchmesser unterschiedlich groß, so dass zwischen den Blechlamellen 16 und dem Zylinderabschnitt 42 des Gehäuses 38 umlaufende Kühlkanäle 58 gebildet sind, die über nicht dargestellte, in das Gehäuse 38 integrierte Kanäle mit dem Kühlsystem der Brennkraftmaschine verbunden sind.

Die Kanäle 58 können dabei mit entsprechenden Kanälen im Anschlussflansch 52 der Brennkraftmaschine kommunizieren. Ferner könnten entsprechende Dichtringe vorgesehen sein, die die Kanäle 58 nach außen abdichten.

Anstelle von integrierten Kanälen könnten auch Kühlflüssigkeit führende Leitungen an dem Gehäuse 38 angeschlossen sein.

Bei der Montage der Vorrichtung 10 wird zunächst das Gehäuse 38 mittels der Schrauben 54, 56 an dem Anschlussflansch 52 der Brennkraftmaschine befestigt. Sodann wird das Zweimassenschwungrad mit dem Antriebsteil 22, dem Rotor 12 und der Trennkupplung 34 an die Kraftabgabewelle 26 angeschlossen.

Danach wird der Stator 14 mit der entsprechenden elektrischen Verkabelung in den Zylinderabschnitt 42 des Gehäuses 38 eingesetzt und schließlich das Wechselgetriebe über den Flanschabschnitt 44 und die Schrauben 50 montiert.

Alternativ zu der beschriebenen Vormontage der Vorrichtung 10 an der Brennkraftmaschine kann diese ggf. auch an den Anschlussflansch 44 des Wechselgetriebes vormontiert werden. Dazu ist sich die dargestellte Konstruktion im wesentlichen spiegelbildlich vorzustellen, wobei das Ringteil 42 unmittelbar an den Anschlussflansch 44 angeformt sein könnte.

## Patentansprüche

1. Anordnung einer Starter-Generator-Vorrichtung (10) zwischen der Kraftabgabeseite einer Brennkraftmaschine und einem anschließenden Geschwindigkeits-Wechselgetriebe für Kraftfahrzeuge, wobei die aus Rotor (12) und Stator (14) bestehende Vorrichtung in einem an der Brennkraftmaschine und am Wechselgetriebe befestigbaren Gehäuse (38) angeordnet und mit einer den Kraftfluss unterbrechenden Trennkupplung (34) kombiniert ist, wobei der Rotor (12) und der Stator (14) radial über der nachgeschalteten Trennkupplung (34) positioniert sind, wobei der Rotor (12) auf einem topfförmigen und an der Kraftabgabewelle (26) der Brennkraftmaschine befestigten Antriebsteil (22) befestigt ist, **dadurch gekennzeichnet, dass** das am Wechselgetriebe befestigbare Gehäuse (38) ringförmig, einerseits offen gegenüber einem Anschlussflansch (44) des Wechselgetriebes ausgebildet ist, dass geschichtete Blechlamellen (16) des Stators (14) innerhalb des ringförmigen, einerseits offenen Gehäuses (38) kraft- und/oder formschlüssig aufgenommen und vom Anschlussflansch (44) des Wechselgetriebes gehalten sind, dass die Blechlamellen (16) von umlaufenden Kühlkanälen (58) innerhalb des Gehäuses (38) umgeben und mit dem Kühlsystem der Brennkraftmaschine über Leitungen und/oder integrierte Kanäle verbunden sind, und dass der an das Gehäuse (38) angeschraubte Anschlussflansch (44) des Wechselgetriebes mit einem Ringvorsprung (46) in das Gehäuse (38) einragt, und dass in den Ringvorsprung (46) ein umlaufender Dichtring (48) zur Abdichtung der Kühlkanäle (58) des Gehäuses (38) eingesetzt ist.

2. Anordnung nach Anspruch 1, **dadurch gekennzeichnet, dass** das Antriebsteil (22) mit einem Zweimassenschwungrad kombiniert ist, dessen Sekundärmasse die nachgeschaltete Trennkupplung (34) bildet.

3. Anordnung nach Anspruch 1 oder 2, **dadurch gekennzeichnet, dass** die Trennkupplung (34) nahezu vollständig innerhalb des topfförmigen Antriebsteiles (22) liegt.

4. Anordnung nach einem der vorhergehenden Ansprüche, **dadurch gekennzeichnet, dass** die Kühlkanäle (58) durch im Durchmesser unterschiedlich große Blechlamellen (16) gebildet sind.

5. Anordnung nach einem der Ansprüche 1 bis 4, **dadurch gekennzeichnet, dass** das Gehäuse (38) mit einem ringförmigen Flanschabschnitt (40) an der Brennkraftmaschine befestigt ist und dass zumindest einige Schrauben (50) zur Befestigung des Wechselgetriebes den Anschlussflansch (44) des Wechselgetriebes und das Gehäuse (38) mit den Blechlamellen (16) durchdringen.

6. Anordnung nach Anspruch 5, **dadurch gekennzeichnet, dass** einige weitere Schrauben (50) zur Befestigung des Wechselgetriebes zusätzlich den Anschlussflansch (52) der Brennkraftmaschine durchdringen.

7. Anordnung nach Anspruch 5 oder 6, **dadurch gekennzeichnet, dass** zur Befestigung des Flanschabschnittes (40) des Gehäuses (38) mit der Brennkraftmaschine teilweise Befestigungsschrauben (56) von der Gehäuseseite und teilweise Befestigungsschrauben (54) von der Brennkraftmaschinenseite aus eingeschraubt sind.

## Claims

1. Arrangement of a starter generator device (10) between the power output side of a combustion engine and a connected change-speed gearbox for motor vehicles, wherein the device consisting of rotor (12) and stator (14) is arranged in a housing (38) attachable on the combustion engine and on the change-speed gearbox and is combined with a separating clutch (34) that interrupts the power flow, wherein the rotor (12) and the stator (14) are positioned radially above the downstream separating clutch (34), wherein the rotor (12) is attached on a pot-shaped drive part (22) attached on the power output shaft (26) of the combustion engine, **characterised in that** the housing (38) attachable on the change-speed gearbox is formed in the shape of a ring, open on one side opposite a connecting flange (44) of the change-speed gearbox, that stacked lamination plates (16) of the stator (14) are accommodated, by means of force-fitting and/or form-fitting, inside the ring-shaped housing (38), open on one side, and are held by the connecting flange (44) of the change-speed gearbox, that the lamination plates (16) are surrounded by cooling ducts (58) running round them inside the housing (38) and are connected with the cooling system of the combustion engine via lines and/or integrated ducts, and that the connecting flange (44) of the change-speed gearbox screwed onto the housing (38) projects into the housing (38) with an annular projection (46), and that inserted into the annular projection (46) there is a circumferential sealing ring (48) to seal the cooling ducts (58) of the housing (38).

2. Arrangement according to claim 1, **characterised in that** the drive part (22) is combined with a dual-mass flywheel, the secondary mass of which forms the downstream separating clutch (34).

3. Arrangement according to claim 1 or 2, **characterised in that** the separating clutch (34) lies almost entirely inside the pot-shaped drive part (22).

4. Arrangement according to any of the preceding claims, **characterised in that** the cooling ducts (58) are formed by lamination plates (16) having diameters of different sizes.

5. Arrangement according to any of claims 1 to 4, **characterised in that** the housing (38) is attached on the combustion engine with a ring-shaped flange section (40) and that at least some bolts (50) for the attaching of the change-speed gearbox pass through the connecting flange (44) of the change-speed gearbox and the housing (38) with the lamination plates (16).

6. Arrangement according to claim 5, **characterised in that** some further bolts (50) for the attaching of the change-speed gearbox additionally pass through the connecting flange (52) of the combustion engine.

7. Arrangement according to claim 5 or 6, **characterised in that**, to attach the flange section (40) of the housing (38) with the combustion engine, some attachment bolts (56) are screwed in from the housing side and some attachment bolts (54) are screwed in from the combustion engine side.

## Revendications

1. Agencement d'un dispositif démarreur-alternateur (10) entre le côté d'énergie délivrée d'un moteur à combustion interne et une boîte de vitesses adjacente pour des véhicules automobiles, dans lequel le dispositif se composant d'un rotor (12) et d'un stator (14) est agencé dans un boîtier (38) pouvant être fixé sur le moteur à combustion interne et sur la boîte de vitesses et est combiné à un couplage de séparation (34) interrompant le flux de force, dans lequel le rotor (12) et le stator (14) sont positionnés radialement sur le couplage de séparation (34) monté en aval, dans lequel le rotor (12) est fixé sur une partie d'entraînement (22) en forme de pot et fixée sur l'arbre de d'énergie délivrée (26) du moteur à combustion interne, **caractérisé en ce que** le boîtier (38) pouvant être fixé sur la boîte de vitesses est réalisé en forme d'anneau, d'un côté ouvert par rapport à une bride de raccordement (44) de la boîte de vitesses, que des lamelles de tôle (16) en couche du stator (14) sont reçues à force et/ou à complémentarité de forme dans le boîtier (38) annulaire ouvert d'un côté et sont maintenues par la bride de raccordement (44) de la boîte de vitesses, que les lamelles de tôle (16) sont entourées par des canaux de refroidissement (58) tournants dans le boîtier (38) et sont raccordées au système de refroidissement du moteur à combustion interne par des conduites et/ou des canaux intégrés, et que la bride de raccordement (44) vissée sur le boîtier (38) de la boîte de vitesses pénètre avec une saillie annulaire (46) dans le boîtier (38), et qu'un anneau étanche tournant (48) est inséré dans la saillie annulaire (46) pour rendre étanche les canaux de refroidissement (58) du boîtier (38).

2. Agencement selon la revendication 1, **caractérisé en ce que** la partie d'entraînement (22) est combinée à un volant d'inertie à deux masses dont la masse secondaire forme le couplage de séparation monté en aval (34).

3. Agencement selon la revendication 1 ou 2, **caractérisé en ce que** le couplage de séparation (34) se trouve presque complètement dans la partie d'entraînement (22) en forme de pot.

4. Agencement selon l'une quelconque des revendications précédentes, **caractérisé en ce que** les canaux de refroidissement (58) sont formés par des lamelles de tôle (16) au diamètre de différente grandeur.

5. Agencement selon l'une quelconque des revendications 1 à 4, **caractérisé en ce que** le boîtier (38) est fixé avec une section de bride (40) annulaire sur le moteur à combustion interne et qu'au moins certaines vis (50) traversent pour la fixation de la boîte de vitesses la bride de raccordement (44) de la boîte de vitesses et le boîtier (38) avec les lamelles de tôle (16).

6. Agencement selon la revendication 5, **caractérisé en ce que** certaines autres vis (50) traversent pour la fixation de la boîte de vitesses en outre la bride de raccordement (52) du moteur à combustion interne.

7. Agencement selon la revendication 5 ou 6, **caractérisé en ce que** pour la fixation de la section de bride (40) du boîtier (38) avec le moteur à combustion interne des vis de fixation (56) sont vissées en partie depuis le côté de boîtier et des vis de fixation (54) sont vissées en partie depuis le côté de moteur à combustion interne.
